# EUROPEAN PATENT APPLICATION

(11) **EP 4 592 688 A1**
(43) Date of publication of application: **30.07.2025**
(21) Application number: 23867878.3
(22) Date of filing: 18.07.2023
(51) Int. Cl.: G01N 35/04

(54) **AUTOMATED ANALYSIS DEVICE**

(30) Priority: 21.09.2022 JP 2022150245
(71) Applicant: HITACHI HIGH-TECH CORPORATION, Tokyo 105-6409 (JP)
(72) Inventor: TOMITA, Jun, Tokyo 105-6409 (JP); NODA, Kazuhiro, Tokyo 105-6409 (JP); TANOUE, Hidetsugu, Tokyo 105-6409 (JP); TAKAKURA, Tatsuki, Tokyo 105-6409 (JP); UMEKI, Hiroya, Tokyo 105-6409 (JP); WADA, Kentaro, Tokyo 105-6409 (JP); OKABE, Shugo, Tokyo 105-6409 (JP)
(74) Representative: MERH-IP Matias Erny Reichl Hoffmann Patentanwälte PartG mbB
(86) International application number: PCT/JP2023/026285
(87) International publication number: WO 2024/062752

(57) **Abstract**

[Problem]

To provide an automatic analyzer that can reduce than before scattering of residual liquid in a reaction container in a process of discarding the reaction container.

[Solution]

The chute 305, which guides a reaction container 116a from a transport part 117 to a waste storage unit 202, includes: a reaction container disposal hole 113 to receive the reaction container 116a, which is dropped from the transport unit 117, in the chute 305; a first passage 411 vertically extending by a first distance from the reaction container disposal hole 113; and a second passage 421 extending by a second distance while being inclined at a first angle from a first end 412 of the first passage 411 on a side opposite to the reaction container disposal hole 113. The second passage 421 is configured such that a second end 423 on a side opposite to the first end 412 or 422 is inclined at a second angle such that the chute 305 is directed to the waste storage unit 202.

## Description

### Technical Field

The present invention relates to an automatic analyzer.

### Background Art

In an automatic analyzer that analyzes a biological component, there is a technique in which a reaction container, which is one of used consumables, is placed from an analyzing part into a disposal box set at a predetermined location, and when a certain amount accumulates, the disposal box is taken out of the apparatus and the reaction container is discarded, and the empty disposal box is reset in the predetermined location inside the apparatus (Refer to Patent Literature 1).

### Citation List

### Patent Literature

Patent Literature 1: Japanese Unexamined Patent Application Publication No. 2018-128420

### Summary of Invention

### Technical Problem

According to Patent Literature 1, the reaction container collides with an inner wall surface of a chute in the chute, which serves as a second rail on a disposal path of the reaction container, and residual sample liquid in the reaction container is scattered, and as a result, the reaction container may stop on the disposal path and cause clogging.

Therefore, an object of the present invention is to provide an automatic analyzer that is capable of reducing scattering of residual liquid in a reaction container during a process of discarding the reaction container. Solution to Problem

An automatic analyzer according to an aspect of the present invention includes a transport part that transports a used reaction container, a disposal bin capable of accommodating a plurality of the used reaction containers, and a disposal cylinder having an internal passage guiding the reaction container from the transport part to the disposal bin. The internal passage of the disposal cylinder includes an opening to receive the reaction container dropped from the transport part into the internal passage, a first passage vertically extending by a first distance from the opening, and a second passage extending by a second distance from a first end on a side opposite to the opening of the first passage while being inclined at a first angle. In the second passage, a second end side opposite to the first end is inclined at a second angle such that the internal passage is directed to the disposal bin.

### Advantageous Effects of Invention

According to the present invention, it is possible to provide an automatic analyzer capable of reducing scattering of residual liquid in a reaction container in a process of discarding the reaction container.

### Brief Description of Drawings

Fig. 1 is a perspective view of an automatic analyzer.
Fig. 2 is a cross section of a disposal unit in a first embodiment.
Fig. 3 is a cross section of a disposal cylinder in a disposal unit in a second embodiment.

### Description of Embodiments

Hereinafter, embodiments of an automatic analyzer will be described with reference to the drawings. In the drawings used in the present specification, the same or corresponding components are given the same or similar reference symbols, and repeated descriptions of these components may be omitted.

### <First Embodiment>

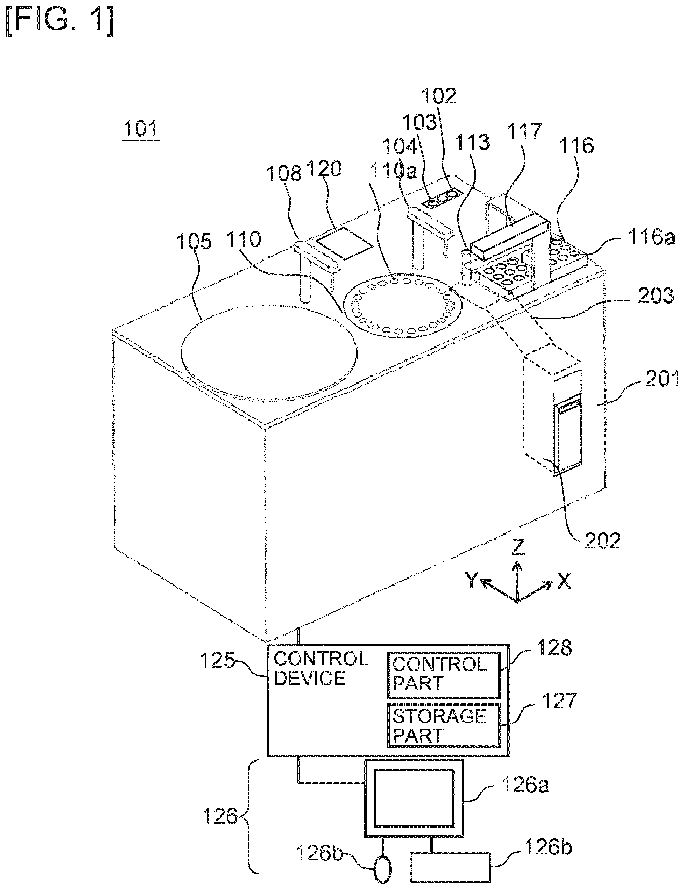

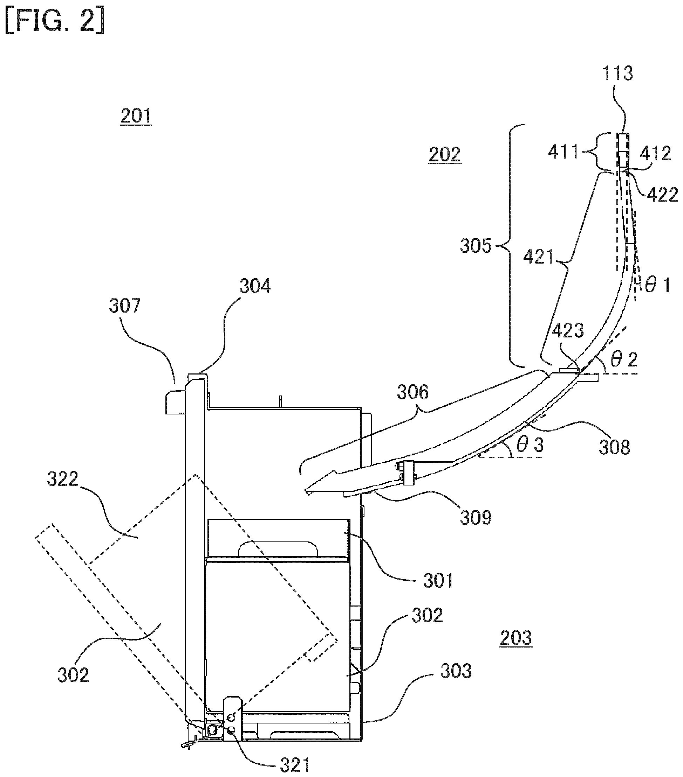

A first embodiment of the automatic analyzer will be described with reference to Figs. 1 and 2.

First, an overall configuration of an automatic analyzer will be described with reference to Fig. 1. Fig. 1 is a diagram illustrating an outline of the automatic analyzer.

The automatic analyzer 101 stores a plurality of reagent containers (not illustrated for convenience of illustration) along the inside of an outer circumferential wall of a cylindrical reagent storage 105 that is rotatably supported around a vertical axis. The automatic analyzer 101 has a function of aspirating a predetermined amount of a predetermined reagent with a dispensing pipette from each of the reagent containers, supplying the reagent to a biological sample such as blood or urine dispensed into a reaction container 116a, and analyzing the biological sample.

First, a transport path for a sample to be analyzed will be described.

The sample to be analyzed is moved inside the automatic analyzer 101 by a sample transport mechanism 102 such as a belt conveyor or a rack handler, is transported to and dispensed at a dispensing position of a sample dispensing mechanism 104 provided with a dispensing pipette for dispensing a sample in a state in which the sample is housed in a sample container 103.

A plurality of reaction containers 116a are supplied into the automatic analyzer 101 while being placed in an unused reaction container storage unit 116.

After the reaction containers 116a are held one by one by the transport part 117 from the unused reaction container storage unit 116, the reaction containers 116a are raised and moved to a sample discharge position (not illustrated). In order to enable such movement, the transport unit 117 is configured to be movable in X axis, Y axis, and Z axis directions.

A disc-shaped incubator 110 is rotatably supported around a vertical central axis, and has a plurality of reaction container setting parts 110a for locking a plurality of reaction containers 116a on a circumference near the outer periphery, and can move each of the reaction containers 116a to a predetermined position by rotating the incubator 110.

Next, the sample dispensing mechanism 104 moves to a region above the sample and aspirates the sample, then moves to a region above a reaction container 116a and discharges the sample into the reaction container 116a. Thereafter, the sample dispensing mechanism 104 cleans a nozzle of the dispensing pipette by a cleaning mechanism (not illustrated). In a case where a replaceable tip is used instead of the nozzle, the tip may be replaced by a replacement mechanism (not illustrated).

Next, a transport path for a reagent to be added to the sample in the reaction container 116a will be described.

The transport part 117 is configured to be capable of moving in a circular motion within a range of the sample discharge position, a reaction container gripping position, and the reaction container setting part 110a on the incubator 110, and to be capable of rotating in order to transport the reaction containers 116a to these positions.

The reagent storage 105, which is rotatably supported around a vertical central axis, has a cylindrical shape and has a hollow interior, forms a reagent holding part that holds a plurality of reagent containers radially along an inner hollow casing.

The reagent dispensing mechanism 108 is configured to be capable of aspirating a reagent in a reagent container and moving to a predetermined position. First, after the reagent dispensing mechanism 108 moves to a region above a predetermined type of reagent on the reagent storage 105 and aspirates a predetermined amount of the reagent, the reagent dispensing mechanism 108 moves to a region above a reaction container 116a of the incubator 110 and discharges the reagent into the reaction container 116a.

A reaction solution is formed after a predetermined reaction time has elapsed after the sample and the predetermined reagent are dispensed. A reaction container 116a storing this reaction solution is transported to the analyzing part 120 by the transport part 117.

The analyzing part 120 detects the concentration and the like of a detection target object in the reaction solution.

Next, the used reaction container 116a that holds the analyzed reaction solution is moved to a region above a reaction container disposal hole 113 by the transport part 117, and discarded into a waste storage unit 202 through the reaction container disposal hole 113.

The automatic analyzer 101 illustrated in Fig. 1 can efficiently analyze a plurality of samples for a plurality of analysis items by combining or repeating the above-described operations.

The above-described mechanisms included in the automatic analyzer 101 are referred to as an analysis operation part.

Furthermore, the automatic analyzer 101, in addition to the analysis operation part, includes an operating part 126 and a control device 125 that controls operations of devices in the analysis operation part.

The control device 125 includes, for example, a hardware board and a computer and includes a storage part 127 such as a hard disk and a control part 128.

In the storage part 127, for example, a control parameter corresponding to each unit and sample information regarding various samples are stored.

The control part 128 may be configured as hardware by a dedicated circuit board or may be configured by software executed by the computer. In a case where the control part 128 is configured by hardware, the control part 128 can be implemented by integrating a plurality of arithmetic units, which execute processing, on a wiring board or in a semiconductor chip or package. In a case where the control part 128 is configured by software, the control part 128 can be implemented by installing a high-speed general-purpose CPU in the computer and executing a program that executes desired arithmetic processing. It is also possible to upgrade an existing device using a storage medium on which this program is recorded. In addition, these devices, circuits, and the computer are connected via a wired or wireless network, and data is transmitted and received between the devices, the circuits, and the computer as appropriate.

The operating part 126 includes a display part 126a that is a display, and an input part 126b such as a mouse and a keyboard. Information stored in the storage part 127 is displayed on the display part 126a.

The above is the configuration of the automatic analyzer 101 according to the present embodiment.

Although the case where the automatic analyzer is provided with the analyzing part 120 as illustrated in Fig. 1 has been described, the configuration of the automatic analyzer to which the present invention is applied is not limited thereto, and can be applied to an automatic analyzer that is provided with a biochemical system or immune system detection unit, or a biochemical system and immune system detection unit, or a detection unit for other analysis items, in addition to or instead of the analyzing part 120, for example.

In addition, the automatic analyzer is not limited to an automatic analyzer having a single analysis module configuration as illustrated in Fig. 1, and can have a configuration in which two or more of analysis modules capable of measuring the same or different analysis items in various ways and preprocessing modules that perform preprocessing are connected by a transport device.

Next, a disposal unit 201 in the automatic analyzer 101 will be described in detail with reference to Fig. 2. Fig. 2 is a cross section of the disposal unit 201.

As illustrated in Fig. 2, the disposal unit 201 includes the waste storage unit 202 capable of accommodating a plurality of used reaction containers 116a, and a guide unit 203 having a chute 305 that guides a reaction containers 116a from the transport part 117 to the waste storage unit 202.

In the automatic analyzer 101, a reaction container 116a, which is a used consumable, is placed into the disposal box 301 provided at a predetermined position through the reaction container disposal hole 113 provided near the analyzing part, and when a certain amount accumulates, the disposal box 301 is taken out of the apparatus and the reaction container 116a is discarded, and the empty disposal box is reset at the predetermined position inside the apparatus.

In the removal and resetting of the disposal box 301, the disposal box 301 needs to be located at the front of the apparatus, so it is desirable to arrange the disposal box 301 at the front.

It is necessary that a plurality of units such as the reagent storage, each dispensing mechanism, and units such as an optical system unit be arranged in a limited space while taking into account the operating range of each unit and effects on the analysis. As a result of such layout optimization, for example, as illustrated in Fig. 1, in a case where the reagent storage and the like that are frequently accessed by a user are arranged on the front side with priority, the configuration of the disposal system needs to be disposed at the back of the apparatus.

In this configuration, the reaction container disposal hole also needs to be provided at the back, making it difficult to place the disposal box at the front. In this case, the disposal box is disposed at the back, and a mechanism that feeds out the disposal box to the front such that the disposal box can be taken out is required. However, in this mechanism, a space through which the disposal box passes for replacement of the disposal box becomes a dead space, making it difficult to downsize the apparatus.

Therefore, by adding the guide unit 203 to the disposal unit 201, it is possible to arrange the disposal box 301 at the front and reduce the dead space. The reduction in the dead space allows at least one of units, such as a pump and a degassing module, to be arranged below a slope 306, and thus the apparatus can be further downsized without affecting measurement results, user maintenance operations, and the like.

The waste storage unit 202 includes the disposal box 301, a disposal box holder 302, a disposal box housing 303, and an observation window 304.

The disposal box 301 is set in the disposal box holder 302 and can be taken out.

The disposal box holder 302 is connected to the disposal box housing 303 via a hinge 321, and can be expanded to a take-out position 322 for taking out the disposal box 301 by manually pulling a handle 307 provided on the disposal box holder 302. In the present embodiment, the expansion method is done by rotation, but an expansion method of horizontally pulling out may also be used.

The disposal box 301 is a substantially rectangular parallelepiped with an open top, and has a bottomed paper tube structure lined with vinyl, for example. As an example, the disposal box 301 is a vertically long box having a width of approximately 87 mm in a horizontal direction, a depth of 157 mm in a front-rear direction, and a height of 215 mm. The disposal box 301 is stored in the disposal box holder 302 assembled to the disposal box housing 303 disposed at the front of the apparatus.

The observation window 304 is, for example, a transparent plastic plate. The observation window 304 may be a plate having a large number of small holes. The observation window 304 allows a state of dirt on the surface of the slope 306 to be visually checked while preventing a discarded reaction container 116a from coming out of the disposal unit 201.

The guide unit 203 includes the slope 306 that guides a reaction container to the disposal box 301, and the chute 305 that guides a reaction container 116a inserted in the reaction container disposal hole 113 to the slope 306.

The chute 305 has, for example, a plastic cylinder with a cross section that continuously changes from a circular cross section to an oval cross section along a curved trajectory. The chute 305 mainly has the reaction container disposal hole 113 for receiving a reaction container 116a dropped from the transport part 117 into the chute 305, a first passage 411, and a second passage 421. The cross-sectional shape of the chute 305 may be a cylinder including an elliptical cross section, and there is no particular limitation regarding the cross-sectional shape.

Among them, the first passage 411 is a passage provided for a used reaction container 116a and vertically extending by a predetermined first distance from the reaction container disposal hole 113. The first passage 411 is formed such that the sectional area of the passage becomes narrower toward the lower side in the vertical direction from the reaction container disposal hole 113.

The second passage 421 is also a passage for a used reaction container 116a and extends by a predetermined second distance while being inclined at a predetermined first angle θ1 from a first end 412 on the opposite side of the reaction container disposal hole 113 of the first passage 411. Among them, the second passage 421 is bent at the first angle θ1 toward the opposite side of the disposal storage unit 202.

The second passage 421 has a first end 422 connected to the first end 412 of the first passage 411, and a second end 423 on the opposite side of the first end 422. Among them, the second end 423 is inclined at a predetermined second angle θ2 such that the chute 305 is directed toward the waste storage unit 202.

An inner wall surface of the first passage 411 and an inner wall surface of the second passage 421 are continuous.

An example of the chute 305 is a cylinder in which a stable section with an inner diameter of 9mm and a circular cross section of 42.5 mm tapers in a direction from the top side to the bottom side to have an inner diameter of 8mm, and a circular cross section of 86.2 mm with an inner diameter of 8mm continues from a taper exit in a direction from the top side to the bottom side, an elliptical cross section with an inclination of 30° to 60° continuously changes from the circular cross section to an elliptical cross section with a length of 30 mm and a width of 20 mm, and continues to a position 270 mm below a chute entrance, and an elbow having a radius of 1 mm to 250 mm is present in the process of the inclination of 30° to 60°.

A preferable range of the above-described first angle θ1 is not particularly limited, but the range of the first angle θ1 can be set to a range of 1° to 89°, preferably to a range of 1° to 20°, more preferably to a range of 5° to 15°. In addition, a preferable range of the second angle θ2 is not particularly limited, but the range of the second angle θ2 can be set to a range of 1° to 89°, preferably to a range of 30° to 60°, more preferably to a range of 40° to 50°.

The slope 306 is, for example, a plastic component having a slope 308 and a deceleration surface 309, and the guide unit 203 is disposed such that a lower end of the slope 306 is located at an upper end of the disposal box 301.

The slope 308 is a flat surface inclined at a fixed angle of 1° to 89°. The slope 308 may be a flat surface having a slope that changes depending on the location, or may be a semicircle, a semiellipse, or a curved surface that continuously changes along a curved trajectory into a V-shaped cross section. The slope 308 is not particularly limited.

In addition, as a method for making it difficult for the reaction solution to adhere to the surface of the slope 308, the surface can be processed. The processing is, for example, surface texturing, water repellent processing, or hydrophilic processing.

The deceleration surface 309 is a surface formed at a lower part of the slope 308 and has a slope gentler than the slope 308. An enclosure 310 is formed to cover the slope and is a plastic component that prevents scattering to a surrounding region and prevents a reaction container 116a from coming out.

In the guide unit 203, an upper end surface of the slope 306 is located 5 mm above a lower end point of the chute 305. With this arrangement, the installation position of the chute 305 can be stabilized, the angle of incidence of the reaction container 116a onto the slope 306 can be suppressed, and the reaction container 116a can be prevented from bouncing on the slope 306.

In the present embodiment, since the cross-sectional shape of the slope 306 is formed such that the enclosure 310 is opened from the top surface, there is also an effect of preventing a reaction container 116a from clogging in the guide unit 203.

Next, effects of the present embodiment will be described.

The automatic analyzer 101 according to the first embodiment described above includes the transport part 117 that transports a used reaction container 116a, the waste storage unit 202 capable of accommodating a plurality of used reaction containers 116a, and the guide unit 203 having the chute 305 that guides the reaction container 116a from the transport part 117 to the waste storage unit 202. The chute 305 of the guide unit 203 includes the reaction container disposal hole 113 for receiving the reaction container 116a dropped from the transport part 117 into the chute 305, the first passage 411 vertically extending by the first distance from the reaction container disposal hole 113, and the second passage 421 extending by the second distance from the first end 412 on the opposite side of the reaction container disposal hole 113 of the first passage 411 while being inclined at the first angle θ1. In the second passage 421, the second end 423 on the opposite side of the first ends 412, 422 is inclined at the second angle θ2 such that the chute 305 is directed toward the waste storage unit 202.

Therefore, the used reaction container 116a can be transported in a stable state into the chute 305, and also can be transported in the slope 306 in the same flow. Therefore, in the disposal process, it is possible to more effectively prevent residual liquid in the used reaction container 116a from scattering than in the conventional techniques. Therefore, it is possible to reduce clogging of a reaction container 116a compared with the conventional techniques.

In addition, the first passage 411 is formed such that the sectional area of the first passage 411 becomes narrower toward the lower side in the vertical direction from the reaction container disposal hole 113. Therefore, a reaction container 116a can be transported more smoothly inside the chute 305, and the scattering of residual liquid during the disposal process can be more effectively prevented.

Furthermore, the second passage 421 is curved at the first angle θ1 toward the opposite side of the waste storage unit 202, Therefore, while falling directly onto the slope 306 is avoided, the falling trajectory can be corrected to a trajectory that goes straight toward the waste storage unit 202 inside the slope 306 by contacting with the inner wall surface inside the second passage 421. This enables smoother disposal and can further reduce clogging.

In addition, the inner wall surface of the first passage 411 and the inner wall surface the second passage 421 are continuous. Therefore, a section clogged with a reaction container 116a passing through the chute 305 is not present, and the reaction container 116a can be guided to the waste storage unit 202 more smoothly, and the scattering of residual liquid can be more effectively prevented.

### <Second Embodiment>

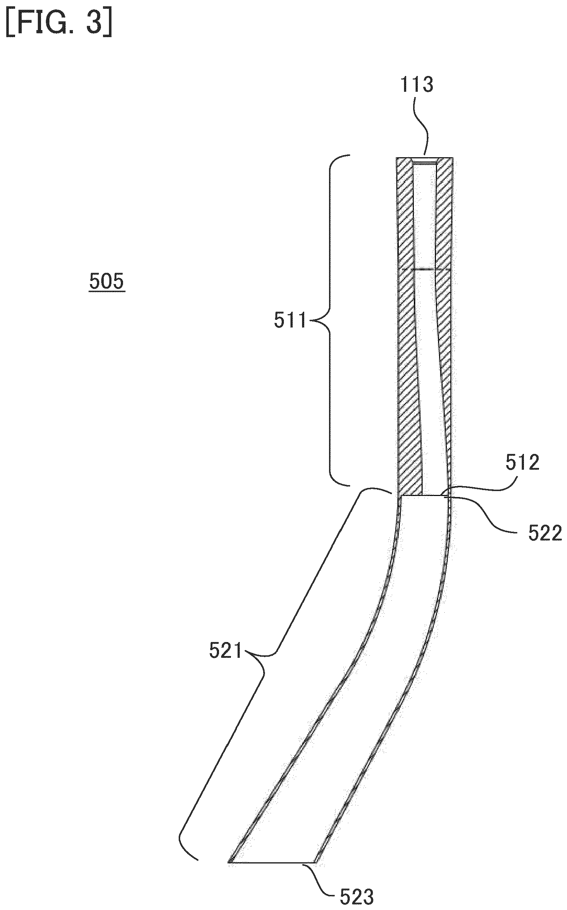

An automatic analyzer according to a second embodiment will be described with reference to Fig. 3. Fig. 3 is a cross section of a chute 505.

In the automatic analyzer according to the present embodiment, the internal shape of a chute 505 is different, an inner wall surface of a first passage 511 and an inner wall surface of a second passage 521 are not continuous, and the sectional area of the second passage 521 is larger than the sectional area of the first passage 511.

Other features are the same, that is, the chute 505 includes the reaction container disposal hole 113, the first passage 511 vertically extending by the first distance from the reaction container disposal hole 113, and the second passage 521 extending by the second distance from a first end 512 on the opposite side of the reaction container disposal hole 113 of the first passage 511 while being inclined at the first angle θ1, and in the second passage 521, a second end 523 on the opposite side of the first end 512 and a first end 522 is inclined at the second angle θ2 such that the chute 505 is directed toward the waste storage unit 202.

For example, the chute 505 illustrated in Fig. 3 has a slope inclined at an angle of 1° to 5° in a region extending by 86.2 mm downward from a stable section exit of the chute 305 illustrated in Fig. 2. A portion after the elbow portion of the slope exit has the same shape as the chute 305. Due to this slope, collision of a reaction container 116a at the elbow portion inside the chute 505 is suppressed, and it is possible to discard the reaction container 116a in a stable manner.

Other configurations and operations are substantially the same as those of the automatic analyzer according to the first embodiment, and details thereof are omitted.

Even in the automatic analyzer according to the second embodiment, almost the same effects as those obtained by the automatic analyzer according to the first embodiment are obtained.

### <Others>

Note that the present invention is not limited to the above-described embodiments and include various modification examples. The embodiments have been described in detail to explain the present invention in an easy-to-understand manner and are not necessarily limited to those having all the configurations described.

### List of Reference Signs

101 Automatic analyzer
102 Sample transport mechanism
103 Sample container
104 Sample dispensing mechanism
105 Reagent storage
108 Reagent dispensing mechanism
110 Incubator
110a Reaction container setting part
113 Reaction container disposal hole (opening)
116 Unused reaction container storage unit
116a Reaction container
117 Transport part
120 Analyzing part
125 Control device
126 Operating part
126a Display part
126b Input part
127 Storage part
128 Control part
201 Disposal unit
202 Waste storage unit (waste bin)
203 Guide unit (disposal cylinder)
301 Disposal box
302 Disposal box holder
303 Disposal box housing
304 Observation window
305 Chute (internal passage)
306 Slope
307 Handle
308 Slope
309 Deceleration surface
321 Hinge
322 Position
411 First passage
412 First end
421 Second Passage
422 First end
423 Second end
505 Chute
511 First passage
512 First end
521 Second passage
522 First end
523 Second end
θ1 First angle
θ2 Second angle
θ3 Inclination angle

## Claims

1. An automatic analyzer, comprising:
a transport part that transports at least one used reaction container;
a disposal bin capable of accommodating a plurality of the used reaction containers; and
a disposal cylinder having an internal passage guiding the reaction container from the transport unit to the disposal bin,
wherein the internal passage of the disposal cylinder includes
an opening to receive the reaction container dropped from the transport part into the internal passage,
a first passage vertically extending by a first distance from the opening, and
a second passage extending by a second distance from a first end on a side opposite to the opening of the first passage while being inclined at a first angle, and
wherein in the second passage, a second end side opposite to the first end is inclined at a second angle such that the internal passage is directed to the disposal bin.

2. The automatic analyzer according to claim 1, wherein the first passage is formed to have a sectional area that narrows downward from the opening in a vertical direction.

3. The automatic analyzer according to claim 1, wherein the second passage is bent at the first angle on a side opposite to the disposal bin.

4. The automatic analyzer according to claim 1, wherein an inner wall surface of the first passage is continuous to an inner wall surface of the second passage.
